# EUROPÄISCHE PATENTSCHRIFT

(11) **EP 2 643 388 B1**
(45) Veröffentlichungstag und Bekanntmachung des Hinweises auf die Patenterteilung: **18.04.2018**
(21) Anmeldenummer: 11790941.6
(22) Anmeldetag: 25.11.2011
(51) Int. Cl.: C08J 3/20, C08K 9/08, C01B 33/44

(54) **VERFAHREN ZUR EXFOLIERUNG ORGANISCH MODIFIZIERTER SCHICHTSILIKATE DURCH HOCHDRUCKDISPERGIERUNG**
PROCESS FOR EXFOLIATING ORGANICALLY MODIFIED SHEET SILICATES BY HIGH-PRESSURE DISPERSION
PROCÉDÉ D'EXFOLIATION DE PHYLLOSILICATES MODIFIÉS DE FAÇON ORGANIQUE PAR DISPERSION À HAUTE PRESSION

(30) Priorität: 26.11.2010 DE 102010052483
(43) Veröffentlichungstag der Anmeldung: 02.10.2013
(73) Patentinhaber: Siemens Aktiengesellschaft, 80333 München (DE)
(72) Erfinder: GRÜBEL, André, 90768 Fürth (DE); ALTSTÄDT, Volker, 95448 Bayreuth (DE); BEIER, Uwe, 85635 Ohenkirchen-Siege (DE); GRÖPPEL, Peter, 91052 Erlangen (DE); MÜLHAUPT, Rolf, 79117 Freiburg (DE); NEDELCU, Michael, 77652 Offenburg (DE); WISSERT, Meik, 79111 Freiburg (DE)
(86) Internationale Anmeldenummer: PCT/EP2011/071047
(87) Internationale Veröffentlichungsnummer: WO 2012/069640

(56) Entgegenhaltungen:
- DE-A1-102005 050 389
- JP-A- 11 246 729
- US-A- 5 554 670
- US-A1- 2009 283 940
- WEIPING LIU ET AL: "Morphology and performance of epoxy nanocomposites modified with organoclay and rubber", POLYMER ENGINEERING & SCIENCE, Bd. 44, Nr. 6, 1. Januar 2004 (2004-01-01) , Seiten 1178-1186, XP55018226, ISSN: 0032-3888, DOI: 10.1002/pen.20111
- LIU ET AL: "Fracture toughness and water uptake of high-performance epoxy/nanoclay nanocomposites", COMPOSITES SCIENCE AND TECHNOLOGY, ELSEVIER, UK, Bd. 65, Nr. 15-16, 1. Dezember 2005 (2005-12-01), Seiten 2364-2373, XP005148111, ISSN: 0266-3538, DOI: 10.1016/J.COMPSCITECH.2005.06.007
- LIU W ET AL: "Organoclay-modified high performance epoxy nanocomposites", COMPOSITES SCIENCE AND TECHNOLOGY, ELSEVIER, UK, Bd. 65, Nr. 2, 1. Februar 2005 (2005-02-01), Seiten 307-316, XP004646967, ISSN: 0266-3538, DOI: 10.1016/J.COMPSCITECH.2004.07.012

## Beschreibung

Die Erfindung betrifft ein Verfahren zur Exfolierung organisch modifizierter Schichtsilikate durch Hochdruckdispergierung.

Schichtsilikate haben in den letzten Jahren enorme Bedeutung als Füllstoff für Polymere erlangt. Allerdings lassen sich die hydrophilen Schichtsilikate im reinen Zustand nur in wasserlöslichen Polymeren wie Polyethylenoxid oder Polyvinylalkohol dispergieren. Für hydrophobe Polymere werden meist organischmodifizierte Schichtsilikate, auch Organoclays genannt, verwendet. Die eingesetzten Schichtsilikate basieren meist auf Glimmer, Talk, Serpentin, Vermiculit, Muskovit, Kaolinit, Bentonit und Montmorollinit oder Hectorit. Montmorollinit ist Hauptbestandteil von Bentonit, einem Gestein, das weltweit verbreitet ist. Hectorite kommen weitaus seltener vor und sind auch als synthetische Produkte auf dem Markt, z.B. Somasif ME 100, das durch mehrstündiges Erhitzen von Talk [Mg6Si8020(OH)4] mit Na2SiF6 hergestellt wird. Diese quellfähigen 2:1 Schichtsilikate gehören zur Klasse der Smectite.

Die Struktur besteht aus [SiO4]-Tetraedern, die über gemeinsame Sauerstoffionen so zu Schichten verknüpft sind, dass alle Spitzen in eine Richtung weisen, und [M(O,OH)]-Oktaedern, die über Kanten zu einer Oktaederschicht verknüpft sind. Bei den Dreischichtmineralen sind 2 Tetraederschichten an eine Oktaederschicht kondensiert, so dass eine Gesamtschichtdicke von etwa 1 nm entsteht. Dabei gehören die Sauerstoffionen der Tetraederspitzen gleichzeitig den Sauerstoffoktaedern an; alle Sauerstoffionen der Oktaederschicht, die nicht gleichzeitig zu einem [SiO4]-Tetraeder gehören, liegen als OH--Ionen vor. Beim dioktaedrischen Montmorollinit ist ein Teil der dreiwertigen Al3+-Kationen in den Oktaederpositionen durch Mg2+-Kationen ersetzt, woraus eine partiell negative Ladung der gesamten Schicht resultiert (mittlere Schichtladung der Formeleinheit: 0,25-0,4). Die negative Schichtladung ergibt sich beim trioktaedrischen Hectorit durch die partielle Substitution von Mg2+-Ionen der Oktaeder durch einwertige Li+-Kationen. Zum Ladungsausgleich dienen Na+-Ionen oder Ca2+-Ionen, die zwischen die Schichten eingelagert sind. Diese können durch andere Kationen ausgetauscht werden.

Diese Eigenschaft der Tonminerale macht man sich zunutze, um organische Kationen wie Alkylammonium- oder Phosphonium-Ionen zwischen die Schichten einzulagern und das Schichtsilikat dadurch mit unpolaren Polymeren verträglich zu machen. Meist tragen die Ammoniumverbindungen ein oder zwei Alkylketten mit 12 bis 18 Kohlenstoffatomen. Dabei wächst der Schichtabstand mit steigender Anzahl an C-Atomen und mit wachsender Austauschkapazität des Schichtsilikats. Zusätzlich können diese Alkylammoniumverbindungen auch funktionelle Gruppen tragen, die mit dem Matrixpolymer reagieren oder auch als Initiatoren fungieren und somit die Wechselwirkung zwischen Polymer und Füllstoff verbessern. Bei tiefen Temperaturen nehmen die Alkylketten, die elektrostatisch an die Silikatoberfläche gebunden sind, eine all-trans Konformation ein und sind abhängig von der Anzahl der Alkylketten und deren Packungsdichte gegenüber der Flächennormalen der Silikatschichten geneigt. Wenn die Temperatur erhöht wird, kommt es zu Transformationen der Konformation von trans zu gauche und schließlich zur Ausbildung einer ungeordneten flüssigkeitsähnlichen Phase.

Für die Herstellung von Polymer/Schichtsilikat-Nanokompositen gibt es im Wesentlichen drei Methoden:
Lösungsinterkalation von Polymeren,
in situ Polymerisationsmethoden, und
die Interkalation von Polymeren in der Schmelze.

Die Lösungsinterkalation ist vor allem für wasserlösliche Polymere wie PEO und PVA interessant, da diese direkt mit einer wässrigen Dispersion der Schichtsilikate gemischt werden können. Aber auch PS und andere Polymere können in organischen Lösungsmitteln zwischen die Schichten eingequollen werden. Bei den in situ Polymerisationsmethoden wird das Monomer selbst oder als Lösung in das Schichtsilikat eingequollen und dann die Polymerisation gestartet. Diese Technik ist schon lange bekannt, wurde aber erst in den letzten Jahren durch die Entdeckung der Verstärkungswirkung der Schichtsilikate für Polymere wieder intensiv genutzt. Auf diesem Weg wurden u.a. Komposite mit Nylon, PE, Polyamid und PET hergestellt. Je nachdem, wie gut das Monomer zwischen die Schichten einquillt, erhält man interkalierte oder exfolierte Komposite.

Eine sehr elegante Methode, bei der man sichergeht, dass die Polymerisation zwischen den Schichten abläuft, ist eine kontrollierte Polymerisation ausgehend von einer Initiatorfunktion, die über die Ammoniumverbindung beim Kationenaustausch in das Schichtsilikat gebracht wurde. Für industrielle Anwendungen eignet sich insbesondere die Schmelzinterkalation von Polymeren, um Polymer/Schichtsilikat-Nanokomposite herzustellen, da aus ökonomischen und ökologischen Gründen die Verwendung von Lösungsmitteln möglichst zu vermeiden ist. Dabei wird das Polymer in der Schmelze mit modifizierten Schichtsilikaten gemischt. Aus thermodynamischer Sicht ist es für unpolare Polymerketten in der Schmelze sehr ungünstig, zwischen die Silikatschichten einzudringen, da sie dadurch an Konformationsentropie verlieren und keine guten Wechselwirkungen mit dem polaren Schichtsilikat besitzen. Durch die Wahl eines geeigneten Modifikators kann diese Situation etwas verbessert werden, da die Modifikatorketten bei einer Schichtaufweitung an Entropie gewinnen und mit dem Polymer wechselwirken können. Die Herstellung solcher Komposite erfolgt meist in einem Extruder, dort herrschen sehr hohe Scherkräfte, die eine Dispersion der Schichtsilikate erleichtern. Die Scherkräfte sind dabei umso höher, je größer das Molekulargewicht ist. Dadurch wird eine Exfolierung der Silikatschichten erleichtert, aber die Partikel werden auch stärker zerkleinert.

Prinzipiell können drei Grenzfälle von Kompositstrukturen realisiert werden:
a) konventionelle Komposite, bei denen die Polymerketten nicht zwischen die Schichten der Silikatstapel eindringen,
b) interkalierte Komposite, bei denen die Polymerketten zwischen den Schichten eingelagert sind und den Schichtabstand dadurch vergrößern, und
c) exfolierte Komposite, bei denen einzelne Silikatschichten homogen im Komposit vorliegen.

Um eine Exfolierung der Schichtstapel zu erreichen, sind demnach zum einen die Wechselwirkungen zwischen Polymer, Schichtsilikat und Modifikator, zum anderen die Scherkräfte beim Herstellungsprozess zu optimieren.

Die Methode der Schmelzinterkalation zur Herstellung von Polymer/Schichtsilikat-Nanokompositen wird für eine Vielzahl von Thermoplasten verwendet. U.a. werden auf diese Weise Komposite mit PS, PEO, Nylon, PP und PET hergestellt. Die Verwendung von Schichtsilikaten bzw. Organoclays als Füllstoff ist deswegen so interessant, weil sie aufgrund ihres hohen Aspektverhältnisses, insbesondere wenn die Schichten exfoliert sind (Länge: mehrere 100 nm, Dicke: 1 nm), schon bei geringer Konzentration die mechanischen Eigenschaften des Polymers erheblich verbessern. Außerdem werden auch Hitzebeständigkeit, Flammschutz, Gasbarriereeigenschaften, u.a. optimiert. Dies macht sie auch als Füllstoff für Elastomere interessant. Dabei wurden bisher v.a. Elastomer-Komposite auf der Basis von PDMS, Naturkautschuk und SBR untersucht, daneben wurden auch synthetisches Polyisopren, EPDM, epoxidierter Naturkautschuk, NBR u.a. als Matrixpolymer verwendet.

Eine Exfolierung und homogene Verteilung der einzelnen Schichtsilikatlamellen in Epoxidharzen aliphatischer und cycloaliphatischer Struktur konnte aber bisher nur bedingt über Lösungsmittel, die nachfolgend in einem Prozess gegen die Harzmatrix ausgetauscht wurden, erreicht werden und wurde in der Literatur kaum aufgezeigt. Dieser aufwendige Prozess bringt eine Vielzahl von Nachteilen mit sich:
zeitintensiver Prozess von mehreren Stunden,
Einsatz von kostenintensiven Lösungsmitteln,
Energieintensives Entfernen von Lösungsmittelresten,
Kostenintensive Entsorgung von Lösungsmittel, und
Umwelt- und Humangefährdung durch entweichende Lösungsmittel.

Neben dieser Lösungsmittel-basierten Route gibt es noch weitere Routen zur Erlangung von lediglich interkalierten, partiell exfolierten Nanokompositen, wie z.B.:

Vorquellen von Schichtsilikaten in Epoxidharzmatrizes durch Einrühren dieser und nachfolgender Interkalierung durch deren Aushärtung durch eine Härterkomponente bei erhöhten Temperaturen. Nachteilig ist dabei, dass es lediglich zum Aufquellen (Interkalierung) von Strukturen im Mikrometerbereich kommt und keine Separierung der einzelnen Schichtsilikatlamellen voneinander auftritt.

Einsatz von Rührorganen und hochfrequenten Schallquellen. Dabei ist es nachteilig, dass auch hiermit nur eine homogene Verteilung von mikrometergrossen Schichtsilikat-Paketen erzielt werden kann, ohne dass eine Separierung der einzelnen, das Schichtsilikat aufbauen Schichten auftritt. Dieses Ergebnis ist auch nicht durch eine Kombination der beiden Verfahren a) und b) erzielbar.
Der vorliegenden Erfindung liegt daher die Aufgabe zugrunde, ein Verfahren zur Exfolierung von organisch modifizierten Schichtsilikaten anzugeben, bei denen es zu einer zumindest annähernd vollständigen Separierung der einzelnen das Schichtsilikat aufbauenden Schichtsilikatlamellen kommt.
Diese Aufgabe wird erfindungsgemäss durch ein Verfahren zur Exfolierung von organisch modifizierten Schichtsilikaten gelöst, bei dem: ohne den Einsatz von Lösungsmitteln eine Harzkomponente und das Schichtsilikat zu einem fliessfähigen Gemisch vermischt werden;
das Gemisch bei einem Druck von über 50 bar und einer Temperatur von über 0°C hochdruckdispergiert und dann auf Atmosphärendruck entspannt wird, wobei der Vorgang der Hochdruckdispergierung des Gemisches über eine Zeitdauer von bis zu 90 Minuten ausgeführt wird.
Auf diese Weise gelingt es mit der Hochdruckdispergierung aufgrund der so erzeugbaren Scherkräfte an der Grenzfläche Harz-Schichtsilikat bei der Entspannung des dispergierten Gemisches von dem hohen Druck auf einen deutlich tiefer liegenden Druck, z.B. Atmosphärendruck, die einzelnen Schichtsilikatlamellen voneinander abzulösen und diese dann als stabile Suspension vorliegen zu haben. Das Überraschende dabei ist die Tatsache, dass es mit dem sprunghaften Druckabfall gelingt diese Exfolierung zu erzielen.

Zur Erzielung einer besonders homogenen Dispersion (gleichmässige Exfolierung) ist es vorteilhaft, wenn das Gemisch im Rückfluss hochdruckdispergiert wird.

Hinsichtlich des Druckabfalls hat es sich als besonders vorteilhaft erwiesen, wenn das Gemisch bei der Hochdruckdispergierung auf Atmosphärendruck entspannt wird.

Eine hinreichende Dispergierbarkeit des Harz-Schichtsilikat-Gemisches ergibt sich, wenn das Schichtsilikat in dem Gemisch einen Anteil von 0,05 Gew.% bis 50 Gew.% aufweist.

Die Zeitdauer der Hochdruckdispergierung ist ebenfalls eine durchaus interessante Prozessgrösse. Es hat sich gezeigt, dass eine hinreichende Exfolierung eintritt, wenn der Vorgang der Hochdruckdispergierung des Gemisches über eine Zeitdauer von bis zu 90 Minuten ausgeführt wird.

Ausführungsbeispiele werden nachfolgend anhand einer Zeichnung näher erläutert. Dabei zeigt die Zeichnung in:
Figur 1 den schematischen Aufbau einer Hochdruckdüse;
Figur 2 den schematischen Aufbau des Hochdruckdispergators;
Figur 3 ein Schliffbild eines schlecht exfolierten Komposits, hergestellt nach dem Verfahren über die Lösungsmittelroute;
Figur 4 ein Schliffbild eines mit dem erfindungsgemässen Verfahren hergestellten Nanokomposits (UV-Härtung);
Figur 5 einen Prozessplan der Hochdruckexfolierung.
Figuren 6 bis 11 zeigen WAXS Spektren nach der Vorreaktion und der hochdispergierten Beispiele.

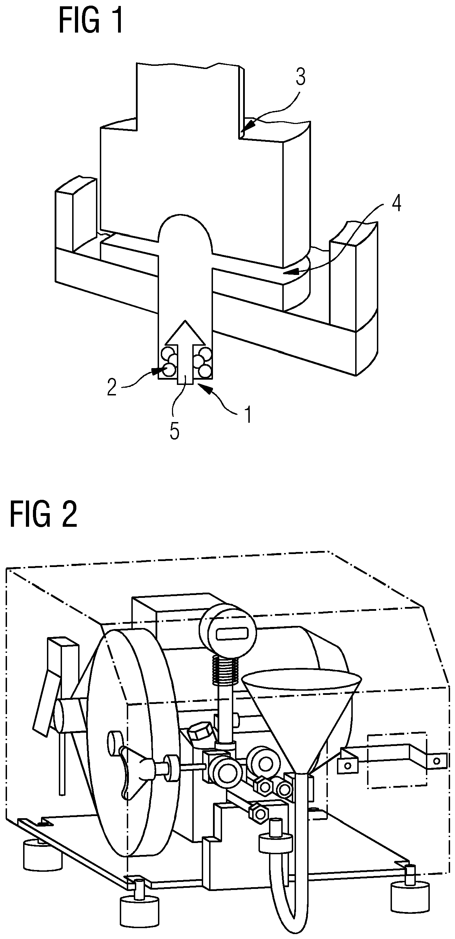

Figur 1 zeigt den schematischen Aufbau einer Hochdruckdüse. Es zeigt den Ausschnitt um das Ventil eines handelsüblichen Emulgators, durch den beispielsweise herkömmlicherweise Milch oder Fett in Wasser eingebracht wird. Zu erkennen ist in Figur 1 die kritische Stelle, an der die Entspannung stattfindet, im Querschnitt. Gemäß dem hier gezeigten Ausführungsbeispiel der Erfindung wird von unten, von der Druckseite her, das Reaktat 2, Harz und Schichtsilikat umfassend, eingebracht und in Pfeilrichtung von 100 bis 2000 bar, die an der Stelle 1 herrschen, auf Atmosphärendruck, der an der Stelle 3 herrscht, entspannt. An der Stelle 4 befindet sich ein mechanisch verstellbarer Spalt zur Druckregelung und Aufbringung der Scherkraft.

Figur 2 zeigt den, der Düse in Figur 1 vorgeschalteten, Hochdruckdispergator. Wiederum ist hier beispielsweise ein handelsübliches Gerät eingesetzt, mit dem in der Lebensmittelindustrie gearbeitet wird. Auf die Erklärung der einzelnen Bestandteile dieses üblichen Gerätes wird verzichtet, da das Gerät wie gesagt auf dem Markt erhältlich ist.

Mittels der Hochdruckdispergierung ist es möglich, innerhalb kürzester Zeit, ohne den Einsatz von Lösungsmitteln oder sonstigen Hilfsstoffen, eine vollständige Separierung der einzelnen, das Schichtsilikat aufbauenden Schichtsilikatlamellen zu nutzen. Hierzu wird die Harzkomponente (z.B. Epoxidharz) in einen Hochdruckdispergator (siehe Figuren 1 und 2) gegeben, die gewünschte Menge an Schichtsilikat (0.05 bis 40 Ges.%) eingewogen und das entstehende Gemisch für kurze Zeit, z.B. 5 bis 60 Minuten, bei Drücken von 100 bis 2000 bar und bei Temperaturen von Raumtemperatur bis ca. 120°C im Rückfluss hochdruckdispergiert. Das einzigartige Resultat der Hochdruckdispergierung beruht auf einem kontinuierlichen Prozess, in welchem das Schichtsilikat/Harzgemisch schlagartig von 100 bis 1500 bar, der in einem Ventil wie in Figur 1 gezeigt durch Verdichtung des Gemisches mit einem Kolben aufgebracht und dann auf Atmophärendruck entspannt wird. Durch diesen hohen Druckabfall entstehen sehr hohe Scherkräfte and der Grenzfläche Harz-Schichtsilikat, so dass die einzelnen Schichtsilikatlamellen voneinander abgelöst werden und dann als stabile Suspension vorliegen. Durch diesen neuen Prozess ist es ohne den im Stand der Technik bekannten Aufwand möglich, das Schichtsilikat in eine nanoskalige Grössenordnung zu überführen. Im Gegensatz zu den im Stand der Technik bekannten Verfahren können grosse Mengen von nanoskaligen vollkommen exfolierten Schichtsilikaten hergestellt werden. Damit ergeben sich die Vorteile einer Erhöhung der spezifischen Silikatoberfläche durch die Exfolierung der einzelnen Lamellen voneinander sowie eine Verbesserung der Barrierewirkung gegenüber Flüssigkeits-, Dampf- und Gaspermeation jeglicher Art. Selbstverständlich werden so auch die mechanischen Eigenschaften von auf Schichtsilikat beruhenden Komposit-Werkstoffen und -Bauteilen verbessert.

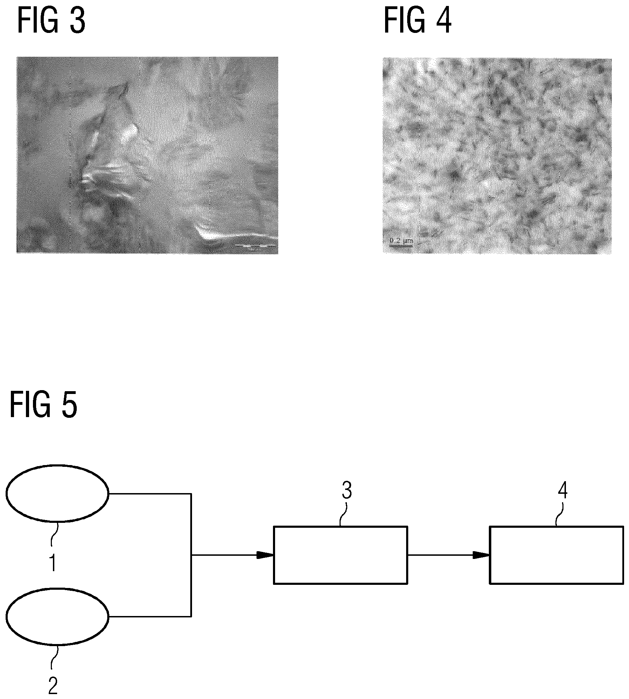

Eindrucksvoll zeigt sich diese Verbesserung in dem Schliffbild gemäß Figur 4 (im Vergleich zu Figur 3), welches ein bei der gewählten Auflösung vollkommen homogen verteiltes exfoliertes Schichtsilikat zeigt. Der in Figur 4 eingetragegen Massstab hat dabei eine Länge von 200 nm. Die exfolierten Strukturen haben dabei eine Auflösung von kleiner als 200 nm.

Figur 5 zeigt einen Prozessplan der Hochdruckexfolierung. Das Schichtsilikat 2 wird mit dem Harz 1 in einen Hochdruckdispergator 3 gegeben. Nach kurzer Zeit, z. B. 5 bis 60 min, erhöhtem Druck (100 bis 1500 bar) und normaler oder erhöhter Temperatur (z.B. RT bis 150°C) wird das Schichtsilikat/Harzgemisch schlagartig von 100 bis 1500 bar Druck auf Atmosphärendruck entspannt. Durch diesen hohen Druckabfall entstehen sehr hohe Scherkräfte an der Grenzfläche Harz-Schichtsilikat, so dass die einzelnen Schichtsilikatlamellen voneinander abgelöst werden und als stabile Suspension 4 vorliegen.

Im Folgenden wird die Erfindung noch anhand von Ausführungsbeispielen näher erläutert:

### Beispiel 1: BFDGE mit 5,7 Gew.% I.30E

500 g Bisphenol-F-Diglycidylether (EPR 158) wurden mit 60 g octadecylamin-modifiziertem Schichtsilikat (I.30E) für 3 h bei 100 °C im Ölbad gerührt. Im Anschluss wurde das Vorreaktat im Hochdruckdispergator bei 1500 bar Druck verarbeitet. Das BFDGE/I.30E-Gemisch wurde hierzu jeweils einmal komplett durch den Dispergator geführt, 15 Minuten im Rückfluss dispergiert und anschließend mit einer stöchio-metrischen Menge an Anhydrid für ca. weitere 12 Minuten bis zum Einsetzen der Vernetzung rückgeführt. Anschließend wurden je 3 g (2,7 g Harz + 0,3 g I.30E) der beiden zuerst entnommenen Reaktate in zwei Teflonbecher gefüllt und mit einen 0,9fach stöchiometrischen Härteranteil, entsprechend 2,25 g MHHPA versetzt. Anschließend wurde unter stöchiometrischer Härterzugabe (MHHPA) bis zum einsetzten der Vernetzung weiterdispergiert und 5,5 g des Produktes in einen Teflonbecher gefüllt. Es wurde jeweils 0,25 Gew.% Beschleuniger (Epicure Catalyst 845) hinzugegeben, alles zu einer homogenen Masse verrührt, nach Zugabe eines Tropfens Entschäumer (BYK A506) im Vakuumofen entgast und bei 130 °C ausgehärtet (drei Probekörper).

### Beispiel 2: BFDGE mit 5,7 Ges.% I.30E und Polytetrahydrofurane-Diglycidylether

558 g Bisphenol-F-Diglycidylether (EPR 158) wurden mit 77 g octadecylamin-modifiziertem Schichtsilikat (I.30E) und 83,7 g Polytetrahydrofurane-Diglycidylether für 3 h bei 100 °C im Ölbad gerührt. Im Anschluss wurde das Vorreaktat im Hochdruckdispergator bei 1500 bar Druck verarbeitet. Das BFDGE/-Reaktivverdünner/I.30E-Gemisch wurde hierzu jeweils einmal komplett durch den Dispergator geführt, 15 Minuten im Rückfluss dispergiert und anschließend mit einer stöchiometrischen Menge an MHHPA für ca. weitere 12 Minuten bis zum Einsetzen der Vernetzung rückgeführt. Anschließend wurden je 3 g (2,7 g Harz + 0,32 g I.30E + 0,405 g Reaktivverdünner) der beiden zuerst entnommenen Reaktate in zwei Teflonbecher gefüllt und mit einem 0,9fach stöchiometrischen Härteranteil, entsprechend 2,25 g MHHPA versetzt. Anschließend wurde unter stöchiometrischer Härterzugabe (MHHPA) bis zum einsetzten der Vernetzung weiterdispergiert und 5,5g des Produktes in einen Teflonbecher gefüllt. Es wurde jeweils 0,25 Gew.% Beschleuniger (Epicure Catalyst 845) hinzugegeben, alles zu einer homogenen Masse verrührt, nach Zugabe eines Tropfens Entschäumer (BYK A506) im Vakuumofen entgast und bei 130 °C ausgehärtet (drei Probekörper).

### Beispiel 3: BFDGE mit 5,7 Ges.% I.30E sowie TMPO und 31 Gew.% sphärischer SiO₂-Partikel

306 g Bisphenol-F-Diglycidylether sowie 204 g SiO₂-Partikel (EPR 158) wurden mit 49,05 g Octadecylamin modifiziertem Schichtsilikat (I.30E) und 45,9 g TMPO für 3 h bei 100 °C im Ölbad gerührt. Im Anschluss wurde das Vorreaktat im Hochdruck-dispergator bei 1500 bar Druck verarbeitet. Das BFDGE/SiO₂-Partikel/Reaktiv-verdünner/I.30E-Gemisch wurde hierzu bei 115 °C mit einer stöchiometrischen Menge an MMHPA, entsprechend 255,5 g, für ca. 10 Minuten bis zum Einsetzen der Vernetzung rückgeführt. In 5,25 g des dispergierten Gemisches wurden 0,25 Ges.% Beschleuniger (Epicure Catalyst 845) hinzugegeben, alles zu einer homogenen Masse verrührt, nach Zugabe eines Tropfens Entschäumer (BYK A506) im Vakuumofen entgast und bei 130 °C ausgehärtet (ein Probekörper).

### Beispiel 4: BFDGE mit 5,7 Gew.% I.30E

83,5 g Bisphenol-F-Diglycidylether wurden mit 10,26 g octadecylamin-modifiziertem Schichtsilikat (I.30E) für 3 h bei 100 °C im Ölbad gerührt. Im Anschluss wurde das Vorreaktat im Hochdruckdispergator bei 1500 bar Druck verarbeitet. In 2,25 g des dispergierten Gemisches wurden 0,25 Gew.% Beschleuniger (Epicure Catalyst 845) und eine stöchiometrische Menge Anhydrid (1,9 g MHHPA) hinzugegeben, alles zu einer homogenen Masse verrührt, nach Zugabe eines Tropfens Entschäumer (BYK A506) im Vakuumofen entgast und bei 130 °C ausgehärtet (ein Probekörper).

### Charakterisierung:

### Beispiel 1: BFDGE mit I.30E

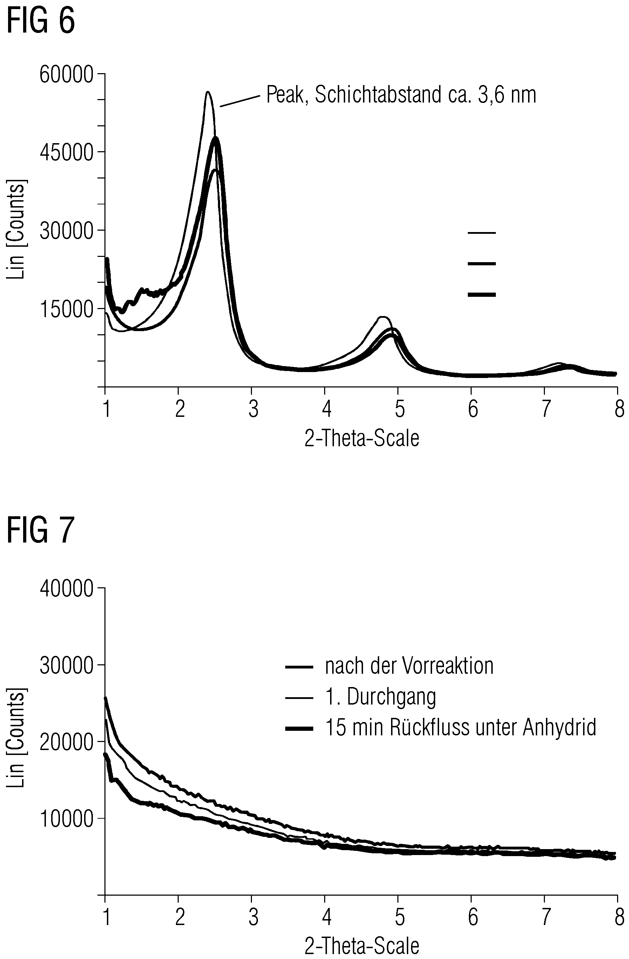

Zur Untersuchung des Einflusses der durch einen Hochdruckdispergator erreichbaren Scherkräfte, wird I.30E für drei Stunden in BFDGE vorreagiert. Das Vorreaktat wird im Hochdruckdispergator für 15 Minuten zirkuliert, wobei der Druck zweistufig zunächst von 1500 bar auf 150 bar und dann auf Umgebungsdruck abgebaut wird. Durch die beim Dispergieren eingeleitete Energie steigt die Temperatur des Produktes innerhalb dieser Zeit auf 120 °C an. Nach dem ersten Durchlauf sowie nach fünfzehn Minuten im Rückfluss durch das Hochdruckventil werden bereits Proben des Produktes entnommen und später ausgehärtet. Mit zunehmender Dauer der Rückführung kommt es zu einem Anstieg der Viskosität, was auf eine Exfolierung der Schichtsilikatpartikel oder Polymerisation der Matrix hinweist. Aus diesem Grund muss nach fünfzehn Minuten ein stöchiometrischer Anteil Anhydrid zugegeben werden, um die Viskosität des Systems herabzusetzen, da andernfalls die Rückführung zum Erliegen kommt. Nach Zugabe des Härters wird das Produkt bis zum Beginn der Vernetzungsreaktion weiter dispergiert. Die WAXS-Spektren in Figur 6 zeigen kaum Unterschiede mit zunehmender Verweilzeit im Dispergator, im Vergleich zur nicht hochdruckdispergierten Referenz. Aufgrund der niedrigen Viskosität des bereits mit Anhydrid versetzten Produktes ist es allerdings nicht möglich dieses mittels WAXS zu untersuchen. Nach der stöchiometrischen Aushärtung zeigt sich mit zunehmender Dauer der Rückführung ein geringerer Anstieg zu kleinen Winkeln hin (Figur 6)

Figur 6 zeigt die WAXS-Spektren nach der Vorreaktion und verschiedenen Verweilzeiten im Hochdruckdispergator. Zu erkennen ist beim Schichtabstand mit ca. 3,6nm eine Verschiebung des Peaks zu kleineren 2-Theta-Werten mit zunehmender Verweilzeit.

Figur 7 zeigt die Waxs-Spektren nach der Vorreaktion, einem ersten Durchgang sowie nach 15 min unter Rückfluss im Hochdruckdispergator und anschließender Zugabe an Anhydrid, beispielsweise MHHPA bis zum Einsetzen der Verhärtung.

Um zu untersuchen, ob der beobachtete Viskositätsanstieg sowie der flache Verlauf der WAXS- Spektren bei kleinen Winkeln tatsächlich auf eine verbesserte Exfolierung zurückzuführen sind, wurden TEM-Aufnahmen der nach verschiedenen Verweilzeiten im Hochdruckdispergator entnommenen Proben nach der Aushärtung angefertigt.
Die betrachteten Komposite sind in der Zusammensetzung mit dem Referenzsystem identisch. Das Referenzsystem hatte gemäß den TEM-Aufnahmen agglomerierte Schichtsilikatpartikel, der Schichtabstand im Mittel beträgt 11,87 +/- 1,81 nm.
Als erste Aufnahme nach dem Verfahren gemäß einem Ausführungsbeispiel der Erfindung wurde eine Abbildung erhalten, die zeigt, dass bereits durch einen Durchlauf im Hochdruckdispergator die Agglomerate verkleinert werden und es zu einer Schichtaufweitung kommt. Der Schichtabstand beträgt dann im Mittel 16,15nm +/- 2,36 nm. Eine weitere TEM-Aufnahme zeigt den positiven Einfluss einer zunehmenden Dispergierdauer. Der gemessene Schichtabstand beträgt dann im Mittel 17,61 +/- 2,42 nm.

Die TEM-Aufnahmen deuten daraufhin, dass mit zunehmender Dispergierdauer die Homogenisierung, Exfolierung und Delamination des Schichtsilikates verbessert wird. Es liegen teilweise noch Agglomerate vor, die verglichen mit der nicht im Hochdruckdispergator behandelten Referenzprobe, deutlich verkleinert sind. Die Schichtsilikatamellen sind erkennbar interkaliert, teilweise sogar ungeordnet exfoliert.
Um die Exfolierung weiter zu verbessern, wird die Hochdruckdispersion mit dem Einsatz eines Reaktivverdünners kombiniert, da sich dieser in vorangegangenen Untersuchungen als förderlich erwies.

Die TEM-Aufnahmen können jederzeit zur Verfügung gestellt werden. Sie eignen sich jedoch nicht als Figuren zur Anmeldung.

### Beispiel 2: BFDGE mit I.30E und Reaktivverdünner

Für die Hochdruckdispergierung wird Polytetrahydrofurandiglycidylether eingesetzt. I.30E wird drei Stunden - jedoch mit 15 Gew.% Polytetrahydrofurandiglycidylether (PTFGE), bezogen auf das BFDGE - vorreagiert. Die Verarbeitung im Hochdruckdispergator erfolgt analog zum vorangegangenen Kapitel, ein Anstieg der Viskosität war ebenfalls feststellbar.

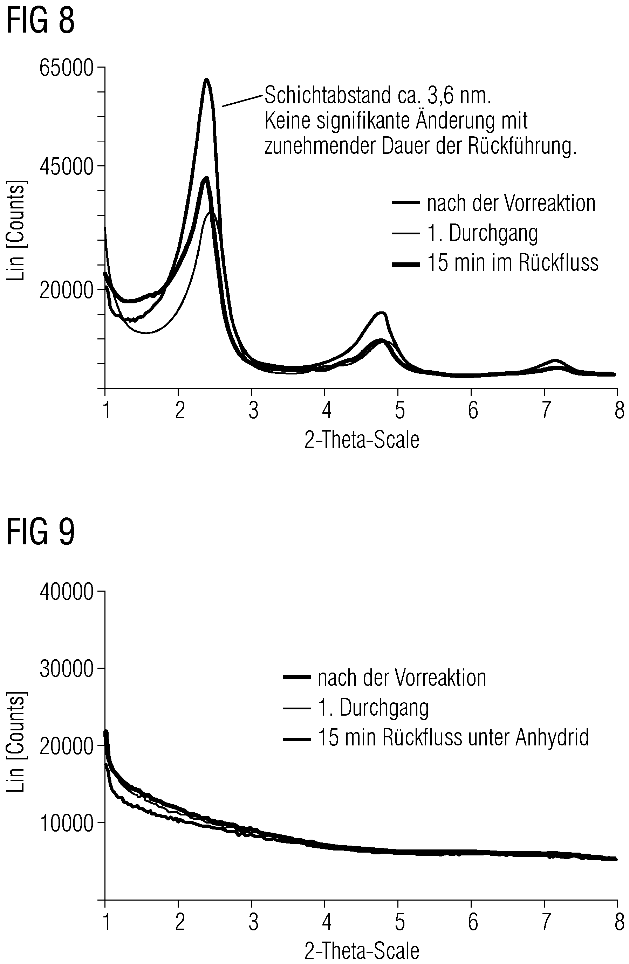

Figur 8 zeigt die WAXS-Spektren nach der Vorreaktion und nach verschiedenen Verweilzeiten im Hochdruckdispergator. Die WAXS-Spektren des Vorreaktates nach der Hochdruckbehandlung zeigen kaum Unterschiede nach verschiedenen Verweilzeiten im Vergleich zur nicht hochdruckdispergierten Probe. Die WAXS-Spektren der ausgehärteten Proben sind im Verlauf den Spektren der ohne Reaktivverdünner hergestellten Proben ähnlich (Figur 9). Ebenfalls ist die Tendenz eines flacheren Anstiegs bei kleinen Winkeln mit zunehmender Verweilzeit im Hochdruckdispergator zu erkennen.

Figur 9 zeigt die WAXS-Spektren nach der Vorreaktion, einem Durchgang sowie 15 min unter Rückfluss im Hochdruckdispergator unter anschließender Zugabe von MHHPA bis zum Einsetzen der Vernetzung ausgehärtet.

Ob letztendlich ein Unterschied hinsichtlich der Exfolierung im Gegensatz zu der ohne Reaktivverdünner vorreagierten Ansätzen resultiert, wurde mittels TEM-Aufnahmen untersucht. Die TEM-Aufnahmen nach der Vorreaktion ohne Hochdruckbehandlung zeigen im Vergleich zu dem ohne Reaktivverdünner vorreagierten Komposit kleinere Agglomerate sowie eine deutliche Vergrößerung des mittleren Schichtabstandes. Der gemessene Schichtabstand beträgt im Mittel 18,88 +/- 2,20nm. Eine TEM-Aufnahme zeigt, ähnlich wie beim reaktivverdünnerfreien Ansatz, nach einem Durchgang im Hochdruckdispergator eine verbesserte Verteilung der Schichtsilikatpartikel. Der gemessene Schichtabstand beträgt im Mittel 21,23 ± 3,37 nm. Die TEM-Aufnahme nach der Vorreaktion und 15 min Rückfluss im Hochdruckdispergator unter anschließender Zugabe von MHHPA bis zum Einsetzen der Vernetzung zeigt nahezu keine Agglomerate mehr. Die Schichten liegen mit deutlich vergrößertem Abstand im Vergleich zur nicht mit Hochdruck behandelten Probe vor oder sind voneinander abgelöst. Der Schichtabstand beträgt im Mittel 22,51 ± 2,84 nm.

Aufgrund der TEM-Aufnahmen erscheint der mit Reaktivverdünner dispergierte Ansatz verbessert gegenüber dem ausschließlich mit BFDGE und I.30E hochdruck-dispergierten Ansatz. Der mittlere Schichtabstand des mit Reaktivverdünner vorreagierten Ansatzes hat sich mit zunehmender Verweilzeit und nach der Dispergierung unter Anwesenheit von Anhydrid um 9,69 nm auf 22,51 nm gegenüber dem Referenzsystem vergrößert. Ein Großteil der Silikatlamellen liegt ungeordnet exfoliert vor, die Größe der verbliebenen Silikatcluster wird stark verringert.

### Beispiel 3: Sphärische Nanopartikel mit I.30E und Reaktivverdünner

Abschließend wird der Einfluss sphärischer Nanopartikel untersucht. Die im mittleren Durchmesser 20 nm großen SiO₂-Partikel könnten zum einen Scherkräfte auf die Silikatschichten übertragen, zum anderen zwischen diese diffundieren und somit für deren Ablösung voneinander sorgen. Das Resultat wäre ein Komposit, in dem einzelne Silikatschichten ungeordnet exfoliert in einer Matrix aus BFDGE und SiO₂-Partikeln vorliegen. Für die Versuche im Rahmen dieser Diplomarbeit wird BFDGE mit 40 Gew.% sphärischen SiO₂-Partikeln (Nanopox E-500, Fa. Nanoresins) mit I.30E verarbeitet. Nach der stöchiometrischen Aushärtung beträgt der Anteil an nanoskaligen SiO₂-Partikeln 31 Gew.% im Komposit. Der Schichtsilikatanteil wird - wie in den vorangegangenen Versuchen - auf 5,7 Ges.% im Komposit eingestellt. Da aufgrund des hohen Gehaltes an Nanopartikeln die Viskosität des Systems zu hoch für eine Verarbeitung im Hochdruckdispergator ist und der positive Einfluss des Reaktivverdünners TMPO auf die Exfolierung bereits bekannt ist (Kapitel 6.3.10), werden 15 Gew.% TMPO (bezogen auf das BFDGE) wie bisher vorreagiert. PTFGE kann aufgrund der höheren Viskosität im Vergleich zu TMPO nicht verwendet werden, da der Verdünnungseffekt dann zu gering ausgefallen würde. Die Verarbeitung im Dispergator erfolgt mit den bereits zuvor verwendeten Parametern. Aufgrund der weiterhin erhöhten Viskosität, muss während der Dispergierung das Anhydrid rasch hinzugegeben werden, da das Gerät aufgrund zu hoher Zähigkeit Probleme beim Ansaugen und Transportieren des Vorreaktates zeigt.

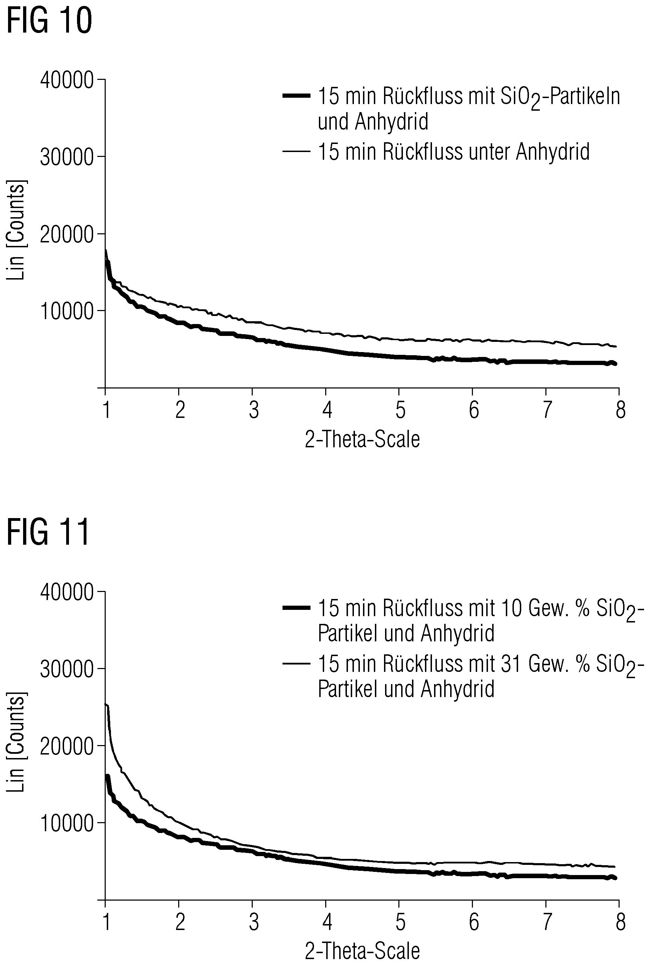

Figur 10 zeigt den Vergleich der WAXS-Spektren der hochdruckdispergierten Proben mit und ohne SiO2-Partikel.

Im WAXS-Spektrum (Figur 10) ist zu erkennen, dass das Basisniveau wesentlich tiefer liegt, als das des Komposits ohne SiO₂-Partikel dispergiert. Der Grund sind Streueffekte des Röntgenstrahls an den sphärischen SiO₂-Partikeln. Der Strahl wird teilweise an den Partikeln gestreut, wodurch weniger Strahlung den Detektor erreicht, was einen Abfall der gemessenen Intensität hervorruft.

Bringt man die Basislinien der WAXS-Spektren zur Deckung, so ist bei kleinen Winkeln das Spektrum der Probe ohne SiO₂-Partikel flacher, was auf einen höheren Grad an Exfolierung hindeutet. Dies wurde anhand von TEM-Aufnahmen des Systems mit 31 Gew.% SiO₂-Partikel überprüft. Es wurden TEM-Aufnahmen des mit 31 Gew% SiO₂-Partikel hochdruckdispergierten Ansatzes angefertigt. In den TEM-Aufnahmen ist zu erkennen, dass das Eindringen der Partikel in die Zwischenschichten des Silikates weitestgehend ausbleibt, jedoch liegen vereinzelt vollständig delaminierte Silikatlamellen vor. Der Schichtabstand beträgt im Mittel 15,88 ± 3,13 nm. Der Grund für den relativ geringen Schichtabstand könnte sein, dass der Gehalt an SiO₂-Partikeln zu hoch ist und somit nicht ausreichend freies Volumen zur Verfügung steht, um die Silikatpartikel voneinander abzutrennen und homogen zu verteilen. Aus diesem Grund wird der Ansatz mit nur 10 Gew.% SiO₂-Partikeln im Gesamtsystem ohne TMPO-Zugabe wiederholt. Die WAXS-Spektren (Figur 11) unterscheiden sich lediglich in ihrem Basisniveau voneinander, was auf den unterschiedlichen Anteil an SiO₂-Partikel zurückzuführen ist.

Figur 11 zeigt den Vergleich der WAXS-Spektren der hochdruckdispergierten Proben mit 10 Gew% und 31 Gew% SiO2-Partikel.

Auch hier wurden wieder TEM-Aufnahmen angefertigt, die zwar eine leichte Verbesserung gegenüber dem mit 31 Ges.% SiO₂-Partikeln gefülltem System, da den Silikatlamellen mehr Raum zur Verteilung in der Matrix zur Verfügung steht, zeigen, generell wird jedoch festgestellt, dass sich die Exfolierung durch den Einsatz von SiO₂-Partikel gegenüber den SiO₂-Partikel-freien - hochdruckdispergierten - Ansätzen nicht verbessert. Der Schichtabstand beträgt im Mittel 15,29 ± 1,65 nm.

### Beispiel 4: BFDGE mit 5,7 Gew.% I.30E

Die TEM-Aufnahmen zeigen eine weitere Verbesserung gegenüber dem mit 31 Gew.% SiO₂-Partikeln gefülltem System, da die Silikatlamellen besser und homogener verteilt sind. Generell wird festgestellt, dass die Exfolierung durch den Einsatz eines Hochdruckdispergators sehr gut verläuft. - Ansätzen nicht verbessert. Der Schichtabstand beträgt im Mittel 15,29 ± 1,65 nm.

## Patentansprüche

1. Verfahren zur Exfolierung von organisch modifizierten Schichtsilikaten, bei dem:
ohne den Einsatz von Lösungsmitteln eine
Harzkomponente und das Schichtsilikat zu einem fließfähigen Gemisch vermischt werden;
das Gemisch bei einem Druck von über 50 bar und einer Temperatur von über 0°C hochdruckdispergiert und dann auf Atmosphärendruck entspannt wird, wobei der Vorgang der Hochdruckdispergierung des Gemisches über eine Zeitdauer von bis zu 90 Minuten ausgeführt wird.

2. Verfahren nach Anspruch 1,
**dadurch gekennzeichnet, dass**
das Gemisch im Rückfluss hochdruckdispergiert wird.

3. Verfahren nach einem der Ansprüche 1 oder 2,
**dadurch gekennzeichnet, dass**
das Schichtsilikat in dem Gemisch einen Anteil von 0,05 Gew.% bis 50 Gew.% aufweist.

## Claims

1. Process for exfoliating organically modified sheet silicates, wherein:
a resin component and the sheet silicate are mixed without the use of solvents to give a flowable mixture;
the mixture is subjected to high-pressure dispersion at a pressure of more than 50 bar and a temperature of more than 0°C and then depressurized to atmospheric pressure, with the operation of high-pressure dispersion of the mixture being carried out over a period of up to 90 minutes.

2. Process according to Claim 1, **characterized in that** the mixture is subjected to high-pressure dispersion with recirculation.

3. Process according to either Claim 1 or 2, **characterized in that** the sheet silicate is present in the mixture in a proportion of from 0.05% by weight to 50% by weight.

## Revendications

1. Procédé d'exfoliation de phyllosilicates modifiés par un agent organique, dans lequel :
sans utiliser de solvants, un composant de résine et le phyllosilicate sont mélangés pour obtenir un mélange fluide, et
le mélange est dispersé à haute pression à une pression supérieure à 50 bars et à une température supérieure à 0°C et est détendu ensuite à la pression atmosphérique, le processus de dispersion à haute pression du mélange étant exécuté pendant une durée allant jusqu'à 90 minutes.

2. Procédé selon la revendication 1,
**caractérisé en ce que**
le mélange est dispersé à haute pression dans le reflux.

3. Procédé selon l'une des revendications 1 ou 2,
**caractérisé en ce que**
le phyllosilicate est présent dans le mélange dans une proportion de 0,05 % en poids à 50 % en poids.
